# EUROPEAN PATENT APPLICATION

(11) **EP 4 815 145 A1**
(43) Date of publication of application: **30.09.2026**
(21) Application number: 24917418.6
(22) Date of filing: 08.10.2024
(51) Int. Cl.: H01M 50/244, H04M 1/02, H01M 50/247, H01M 50/595

(54) **BATTERY PACK AND ELECTRONIC DEVICE INCLUDING SAME**

(30) Priority: 10.01.2024 KR 20240004110; 28.03.2024 KR 20240042568
(71) Applicant: Samsung Electronics Co., Ltd., Suwon-si, Gyeonggi-do 16677 (KR)
(72) Inventor: LEE, Jinseok, Suwon-si Gyeonggi-do 16677 (KR); SHIN, Yongjun, Suwon-si Gyeonggi-do 16677 (KR); YOO, Chul, Suwon-si Gyeonggi-do 16677 (KR); HUR, Juneyoung, Suwon-si Gyeonggi-do 16677 (KR); LEE, Byunggeon, Suwon-si Gyeonggi-do 16677 (KR)
(74) Representative: HGF
(86) International application number: PCT/KR2024/015295
(87) International publication number: WO 2025/150659

(57) **Abstract**

An electronic device is provided. The electronic device comprises: a housing including a support plate; a display disposed on one surface of the support plate; and a battery pack including a main body disposed on the other surface of the support plate and a first adhesive tape of which a first area is used to dispose or attach the main body onto the other surface of the support plate, wherein one surface of the first adhesive tape includes: a non-adhesive region located in at least a portion of the edge of the first area so as to face the upper surface of the main body; a first adhesive region located in the first area to be in contact with the non-adhesive region and attached to the upper surface of the main body while providing a first adhesive force; and a second adhesive region located in the first area to be in contact with at least the first adhesive region among the non-adhesive region and the first adhesive region and attached to the upper surface of the main body while providing a second adhesive force smaller than the first adhesive force.

## Description

### [TECHNICAL FIELD]

The disclosure relates to a battery pack and an electronic device including the same.

### [BACKGROUND ART]

With the development of electronic, information, or communication technologies, a single electronic device includes a variety of functions. For example, a smartphone includes functions, such as a sound player, a camera device, or an electronic notebook in addition to a communication function, and more diverse functions may be implemented on the smartphone through the installation of additional applications. An electronic device may not only execute installed applications or stored files, but also connect to servers or other electronic devices in a wired or wireless manner to receive various types of information in real time.

As electronic devices have become more advanced in performance and miniaturized, carrying and using electronic devices has become commonplace, and portable electronic devices are being provided in various forms. For example, a single user may carry and use multiple portable electronic devices, such as a smartphone, a tablet personal computer (PC), a smart watch, wireless earphones, and/or smart glasses. As the use of such portable electronic devices becomes more widespread and the time spent using them in external spaces increases, users' demands for the portability of electronic devices may increase. For example, user(s) may prefer lighter and smaller electronic devices, while demanding improved performance, such as image quality or sound quality, an attractive appearance, and/or emotional quality felt by the user(s) during use.

The above information is presented as background information only to assist with an understanding of the disclosure. No determination has been made, and no assertion is made, as to whether any of the above might be applicable as prior art with regard to the disclosure.

### [Disclosure of Invention]

### [Solution to Problems]

In accordance with an aspect of the disclosure, an electronic device is provided. The electronic device includes a housing including a support plate, a display disposed on one surface of the support plate, and a battery pack including a body disposed on the other surface of the support plate, and a first adhesive tape disposing or attaching the body on or to the other surface of the support plate, using a first area, wherein one surface of the first adhesive tape includes a non-adhesive area disposed to face an upper surface of the body in at least a portion of an edge of the first area, a first adhesive area disposed in contact with the non-adhesive area in the first area and attached to the upper surface of the body while providing a first adhesive force, and a second adhesive area disposed in contact with at least the first adhesive area out of the non-adhesive area and the first adhesive area, in the first area, and attached to the upper surface of the body while providing a second adhesive force smaller than the first adhesive force.

In accordance with another aspect of the disclosure, a battery pack is provided. The battery pack includes a body including an upper surface, a lower surface opposite to the upper surface, and a side surface connecting the lower surface to the upper surface, and a first adhesive tape including a first area disposed to face the upper surface, wherein one surface of the first adhesive tape includes a non-adhesive area disposed to face the upper surface in at least a portion of an edge of the first area, a first adhesive area disposed in contact with the non-adhesive area in the first area and attached to the upper surface while providing a first adhesive force, and a second adhesive area disposed in contact with at least the first adhesive area out of the non-adhesive area and the first adhesive area, in the first area, and attached to the upper surface while providing a second adhesive force smaller than the first adhesive force.

### [Brief Description of Drawings]

The above and other aspects, features, and advantages of certain embodiments of the disclosure will be more apparent from the following description taken in conjunction with the accompanying drawings, in which:
FIG. 1 is a block diagram illustrating an electronic device in a network environment according to an embodiment of the disclosure;
FIG. 2 is a perspective view illustrating a front surface of an electronic device according to an embodiment of the disclosure;
FIG. 3 is a perspective view illustrating a rear surface of the electronic device illustrated in FIG. 2 according to an embodiment of the disclosure;
FIG. 4 is an exploded perspective view illustrating a front surface of an electronic device according to an embodiment of the disclosure;
FIG. 5 is an exploded perspective view illustrating a rear surface of an electronic device according to an embodiment of the disclosure;
FIG. 6 is an exploded perspective view illustrating arrangement of a battery pack in an electronic device according to an embodiment of the disclosure;
FIG. 7 is a diagram illustrating one surface of a first adhesive tape in an electronic device and/or a battery pack according to an embodiment of the disclosure;
FIG. 8 is a first plan view illustrating a first adhesive tape disposed on a battery body in an electronic device and/or a battery pack according to an embodiment of the disclosure;
FIG. 9 is a second plan view illustrating a first adhesive tape disposed on a battery body in an electronic device and/or a battery pack according to an embodiment of the disclosure;
FIG. 10 is a plan view illustrating a fixing tape disposed in an electronic device and/or a battery pack according to an embodiment of the disclosure;
FIG. 11 is a diagram illustrating a battery pack taken along line B-B' of FIG. 10 according to an embodiment of the disclosure; and
FIG. 12 is a diagram illustrating arrangement of a battery pack in an electronic device according to an embodiment of the disclosure.

Throughout the drawings, like reference numerals will be understood to refer to like parts, components, and structures.

### [Mode for the Invention]

Various structures and/or electronic components may be arranged inside an electronic device. A housing of the electronic device may provide various structures for arranging or supporting electronic components, and the electronic components may be fixed at specified locations inside the housing. The reliability of the electronic device may be improved by more stably fixing the electronic components inside the housing. An electronic device that may be used while on the move, such as a smartphone, may be exposed to external impacts such as dropping. The housing may protect internal structures or electronic components against such external forces. However, the degree of deformation caused by the external forces may vary depending on the mechanical strength or flexibility of the structures or electronic components arranged inside the housing. For example, when there is a difference in the degree of deformation due to external forces, a gap may be created between two components arranged to be in contact with each other, or noise may be generated when the acting external force is removed and the two adjacent components come into contact. Such noise may cause discomfort to the user or reduce the reliability of the electronic device for the user.

An embodiment of the disclosure, which is intended to at least address the problems and/or disadvantages described above, may provide a battery pack and/or an electronic device including the same, which may suppress generation of noise, even when deformed by an external force.

An embodiment of the disclosure may provide a battery pack and/or an electronic device including the same, which may suppress unpleasantness or decreased reliability due to noise.

An embodiment of the disclosure may provide a battery pack and/or an electronic device including the same, which creates an environment facilitating self-repair.

The technical objectives to be achieved in the disclosure are not limited to those mentioned above, and other unmentioned technical objectives may be clearly understood by those skilled in the art from the following description.

The following description of the accompanying drawings may provide an understanding of various exemplary implementations of the disclosure including the claims and their corresponding content. Although an exemplary embodiment disclosed in the following description includes various specific details to aid understanding, this is considered to be one of various exemplary embodiments. Therefore, those skilled in the art will understand that various changes and modifications may be made to various implementations of the disclosure without departing from the scope and spirit of the disclosure. Additionally, for clarity and conciseness, a description of well-known functions and configurations may be avoided.

The terms and words used in the following description and claims may be used to clearly and consistently describe an embodiment of the disclosure, not limited to referential meanings. Accordingly, it will be obvious to those skilled in the art that the following description of various implementations of the disclosure is provided for illustrative purposes, not for the purpose of limiting the disclosure defined by the claims and their equivalents.

Unless the context clearly dictates otherwise, the singular forms "a", "an", and "the" should be understood to include plural meanings. Therefore, for example, a "surface of a component" may be understood to include one or more of the surfaces of the component.

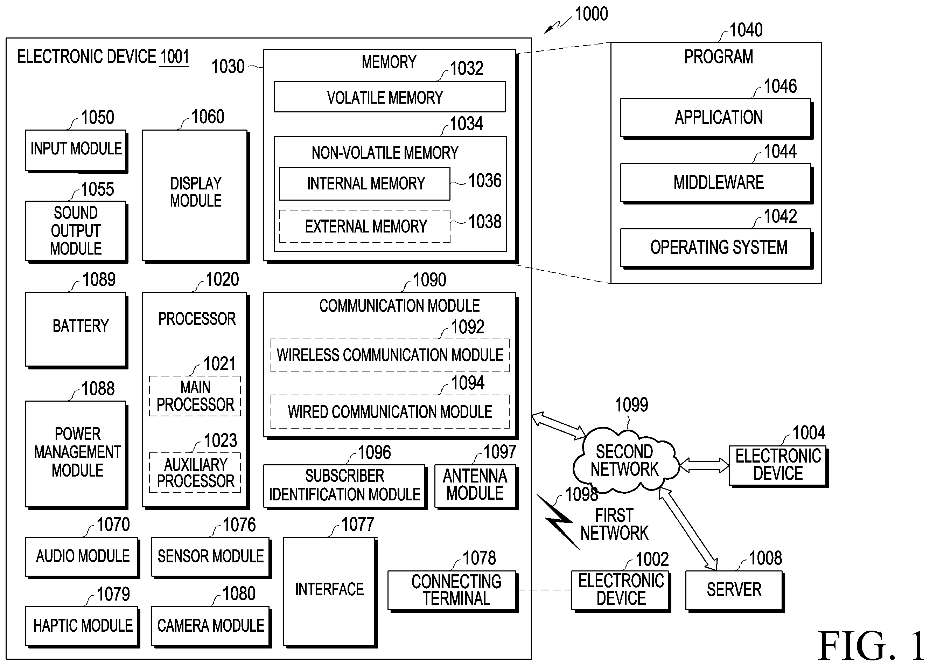

FIG. 1 is a block diagram illustrating an electronic device in a network environment according to an embodiment of the disclosure.
Referring to FIG. 1, an electronic device 1001 in a network environment 1000 may communicate with an external electronic device 1002 via a first network 1098 (e.g., a short-range wireless communication network), or at least one of an external electronic device 1004 or a server 1008 via a second network 1099 (e.g., a long-range wireless communication network). According to an embodiment of the disclosure, the electronic device 1001 may communicate with the external electronic device 1004 via the server 1008. According to an embodiment of the disclosure, the electronic device 1001 may include a processor 1020, memory 1030, an input module 1050, a sound output module 1055, a display module 1060, an audio module 1070, a sensor module 1076, an interface 1077, a connecting terminal 1078, a haptic module 1079, a camera module 1080, a power management module 1088, a battery 1089, a communication module 1090, a subscriber identification module(SIM) 1096, or an antenna module 1097. In some embodiments of the disclosure, at least one of the components (e.g., the connecting terminal 1078) may be omitted from the electronic device 1001, or one or more other components may be added in the electronic device 1001. In some embodiments of the disclosure, some of the components (e.g., the sensor module 1076, the camera module 1080, or the antenna module 1097) may be implemented as a single component (e.g., the display module 1060).

The processor 1020 may execute, for example, software (e.g., a program 1040) to control at least one other component (e.g., a hardware or software component) of the electronic device 1001 coupled with the processor 1020, and may perform various data processing or computation. According to one embodiment of the disclosure, as at least part of the data processing or computation, the processor 1020 may store a command or data received from another component (e.g., the sensor module 1076 or the communication module 1090) in volatile memory 1032, process the command or the data stored in the volatile memory 1032, and store resulting data in non-volatile memory 1034. According to an embodiment of the disclosure, the processor 1020 may include a main processor 1021 (e.g., a central processing unit (CPU) or an application processor (AP)), or an auxiliary processor 1023 (e.g., a graphics processing unit (GPU), a neural processing unit (NPU), an image signal processor (ISP), a sensor hub processor, or a communication processor (CP)) that is operable independently from, or in conjunction with, the main processor 1021. For example, when the electronic device 1001 includes the main processor 1021 and the auxiliary processor 1023, the auxiliary processor 1023 may be adapted to consume less power than the main processor 1021, or to be specific to a specified function. The auxiliary processor 1023 may be implemented as separate from, or as part of the main processor 1021.

The auxiliary processor 1023 may control at least some of functions or states related to at least one component (e.g., the display module 1060, the sensor module 1076, or the communication module 1090) among the components of the electronic device 1001, instead of the main processor 1021 while the main processor 1021 is in an inactive (e.g., a sleep) state, or together with the main processor 1021 while the main processor 1021 is in an active state (e.g., executing an application). According to an embodiment of the disclosure, the auxiliary processor 1023 (e.g., an image signal processor or a communication processor) may be implemented as part of another component (e.g., the camera module 1080 or the communication module 1090) functionally related to the auxiliary processor 1023. According to an embodiment of the disclosure, the auxiliary processor 1023 (e.g., the neural processing unit) may include a hardware structure specified for artificial intelligence model processing. An artificial intelligence model may be generated by machine learning. Such learning may be performed, e.g., by the electronic device 1001 where the artificial intelligence is performed or via a separate server (e.g., the server 1008). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1030 may store various data used by at least one component (e.g., the processor 1020 or the sensor module 1076) of the electronic device 1001. The various data may include, for example, software (e.g., the program 1040) and input data or output data for a command related thereto. The memory 1030 may include the volatile memory 1032 or the non-volatile memory 1034. The non-volatile memory 1034 may include internal memory 1036 and external memory 1038.

The program 1040 may be stored in the memory 1030 as software, and may include, for example, an operating system (OS) 1042, middleware 1044, or an application 1046.

The input module 1050 may receive a command or data to be used by another component (e.g., the processor 1020) of the electronic device 1001, from the outside (e.g., a user) of the electronic device 1001. The input module 1050 may include, for example, a microphone, a mouse, a keyboard, a key (e.g., a button), or a digital pen (e.g., a stylus pen).

The sound output module 1055 may output sound signals to the outside of the electronic device 1001. The sound output module 1055 may include, for example, a speaker or a receiver. The speaker may be used for general purposes, such as playing multimedia or playing record. The receiver may be used for receiving incoming calls. According to an embodiment of the disclosure, the receiver may be implemented as separate from, or as part of the speaker.

The display module 1060 may visually provide information to the outside (e.g., a user) of the electronic device 1001. The display module 1060 may include, for example, a display, a hologram device, or a projector and control circuitry to control a corresponding one of the display, hologram device, and projector. According to an embodiment of the disclosure, the display module 1060 may include a touch sensor adapted to detect a touch, or a pressure sensor adapted to measure the intensity of force incurred by the touch.

The audio module 1070 may convert a sound into an electrical signal and vice versa. According to an embodiment of the disclosure, the audio module 1070 may obtain the sound via the input module 1050, or output the sound via the sound output module 1055 or a headphone of an external electronic device (e.g., the external electronic device 1002) directly (e.g., wiredly) or wirelessly coupled with the electronic device 1001.

The sensor module 1076 may detect an operational state (e.g., power or temperature) of the electronic device 1001 or an environmental state (e.g., a state of a user) external to the electronic device 1001, and then generate an electrical signal or data value corresponding to the detected state. According to an embodiment of the disclosure, the sensor module 1076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1077 may support one or more specified protocols to be used for the electronic device 1001 to be coupled with the external electronic device (e.g., the external electronic device 1002) directly (e.g., wiredly) or wirelessly. According to an embodiment of the disclosure, the interface 1077 may include, for example, a high definition multimedia interface (HDMI), a universal serial bus (USB) interface, a secure digital (SD) card interface, or an audio interface.

A connecting terminal 1078 may include a connector via which the electronic device 1001 may be physically connected with the external electronic device (e.g., the external electronic device 1002). According to an embodiment of the disclosure, the connecting terminal 1078 may include, for example, a HDMI connector, a USB connector, a SD card connector, or an audio connector (e.g., a headphone connector).

The haptic module 1079 may convert an electrical signal into a mechanical stimulus (e.g., a vibration or a movement) or electrical stimulus which may be recognized by a user via his tactile sensation or kinesthetic sensation. According to an embodiment of the disclosure, the haptic module 1079 may include, for example, a motor, a piezoelectric element, or an electric stimulator.

The camera module 1080 may capture a still image or moving images. According to an embodiment of the disclosure, the camera module 1080 may include one or more lenses, image sensors, image signal processors, or flashes.

The power management module 1088 may manage power supplied to the electronic device 1001. According to one embodiment of the disclosure, the power management module 1088 may be implemented as at least part of, for example, a power management integrated circuit (PMIC).

The battery 1089 may supply power to at least one component of the electronic device 1001. According to an embodiment of the disclosure, the battery 1089 may include, for example, a primary cell which is not rechargeable, a secondary cell which is rechargeable, or a fuel cell.

The communication module 1090 may support establishing a direct (e.g., wired) communication channel or a wireless communication channel between the electronic device 1001 and the external electronic device (e.g., the external electronic device 1002, the external electronic device 1004, or the server 1008) and performing communication via the established communication channel. The communication module 1090 may include one or more communication processors that are operable independently from the processor 1020 (e.g., the application processor (AP)) and supports a direct (e.g., wired) communication or a wireless communication. According to an embodiment of the disclosure, the communication module 1090 may include a wireless communication module 1092 (e.g., a cellular communication module, a short-range wireless communication module, or a global navigation satellite system (GNSS) communication module) or a wired communication module 1094 (e.g., a local area network (LAN) communication module or a power line communication (PLC) module). A corresponding one of these communication modules may communicate with the external electronic device via the first network 1098 (e.g., a short-range communication network, such as Bluetooth^{™}, wireless-fidelity (Wi-Fi) direct, or infrared data association (IrDA)) or the second network 1099 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1092 may identify and authenticate the electronic device 1001 in a communication network, such as the first network 1098 or the second network 1099, using subscriber information (e.g., international mobile subscriber identity (IMSI)) stored in the subscriber identification module 1096.

The wireless communication module 1092 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1092 may support a high-frequency band (e.g., the millimeter wave (mmWave) band) to achieve, e.g., a high data transmission rate. The wireless communication module 1092 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1092 may support various requirements specified in the electronic device 1001, an external electronic device (e.g., the external electronic device 1004), or a network system (e.g., the second network 1099). According to an embodiment of the disclosure, the wireless communication module 1092 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1097 may transmit or receive a signal or power to or from the outside (e.g., the external electronic device) of the electronic device 1001. According to an embodiment of the disclosure, the antenna module 1097 may include an antenna including a radiating element including a conductive material or a conductive pattern formed in or on a substrate (e.g., a printed circuit board (PCB)). According to an embodiment of the disclosure, the antenna module 1097 may include a plurality of antennas (e.g., array antennas). In such a case, at least one antenna appropriate for a communication scheme used in the communication network, such as the first network 1098 or the second network 1099, may be selected, for example, by the communication module 1090 (e.g., the wireless communication module 1092) from the plurality of antennas. The signal or the power may then be transmitted or received between the communication module 1090 and the external electronic device via the selected at least one antenna. According to an embodiment of the disclosure, another component (e.g., a radio frequency integrated circuit (RFIC)) other than the radiating element may be additionally formed as part of the antenna module 1097.

According to various embodiments of the disclosure, the antenna module 1097 may form an mmWave antenna module. According to an embodiment of the disclosure, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment of the disclosure, commands or data may be transmitted or received between the electronic device 1001 and the external electronic device 1004 via the server 1008 coupled with the second network 1099. Each of the external electronic devices 1002 or 1004 may be a device of a same type as, or a different type, from the electronic device 1001. According to an embodiment of the disclosure, all or some of operations to be executed at the electronic device 1001 may be executed at one or more of the external electronic devices 1002 or 1004, or the server 1008. For example, if the electronic device 1001 should perform a function or a service automatically, or in response to a request from a user or another device, the electronic device 1001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1001. The electronic device 1001 may provide the outcome, with or without further processing of the outcome, as at least part of a reply to the request. To that end, a cloud computing, distributed computing, mobile edge computing (MEC), or client-server computing technology may be used, for example. The electronic device 1001 may provide ultra low-latency services using, e.g., distributed computing or mobile edge computing. In an embodiment of the disclosure, the external electronic device 1004 may include an internet-of-things (IoT) device. The server 1008 may be an intelligent server using machine learning and/or a neural network. According to an embodiment of the disclosure, the external electronic device 1004 or the server 1008 may be included in the second network 1099. The electronic device 1001 may be applied to intelligent services (e.g., a smart home, a smart city, a smart car, or healthcare) based on 5G communication technology or IoT-related technology.

The electronic device according to embodiment(s) of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that embodiment(s) of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1^{st}" and "2^{nd}," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment of the disclosure, the module may be implemented in a form of an application-specific integrated circuit (ASIC).

Various embodiments of the disclosure may be implemented as software (e.g., a program) including one or more instructions that are stored in a storage medium (e.g., internal memory or external memory) that is readable by a machine (e.g., an electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment of the disclosure, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{TM}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to embodiments of the disclosure, each component (e.g., a module or a program) of the above-described components may include a single entity or multiple entities, and some of the multiple entities may be separately disposed in different components. According to various embodiments of the disclosure, one or more of the above-described components may be omitted, or one or more other components may be added. Alternatively or additionally, a plurality of components (e.g., modules or programs) may be integrated into a single component. In such a case, according to various embodiments of the disclosure, the integrated component may still perform one or more functions of each of the plurality of components in the same or similar manner as they are performed by a corresponding one of the plurality of components before the integration. According to various embodiments of the disclosure, operations performed by the module, the program, or another component may be carried out sequentially, in parallel, repeatedly, or heuristically, or one or more of the operations may be executed in a different order or omitted, or one or more other operations may be added.

In the following detailed description, a length direction, a width direction, and/or a thickness direction of an electronic device may be referred to. The length direction may be defined as a 'Y-axis direction', the width direction may be defined as an 'X-axis direction', and/or the thickness direction may be defined as a 'Z-axis direction'. In an embodiment of the disclosure, regarding a direction that a component faces, a 'negative sign/positive sign (-/+)' may be referred to together with the Cartesian coordinate system illustrated in the drawings. For example, a front surface of an electronic device and/or a housing may be defined as a 'surface facing a +Z direction', and a rear surface thereof may be defined as a 'surface facing a -Z direction'. In an embodiment of the disclosure, a side surface of the electronic device and/or the housing may include an area facing a +X direction, an area facing a +Y direction, an area facing a -X direction, and/or an area facing a -Y direction. In an embodiment of the disclosure, the 'X-axis direction' may mean both the '-X direction' and the '+X direction'. This is based on the Cartesian coordinate system depicted in the drawings, for simplicity of description, and it is to be noted that the description of these directions or components does not limit the embodiment(s) of the disclosure. For example, the Cartesian coordinate system may be defined differently from that in the disclosure depending on the design specifications of the electronic device or a user's usage habits.

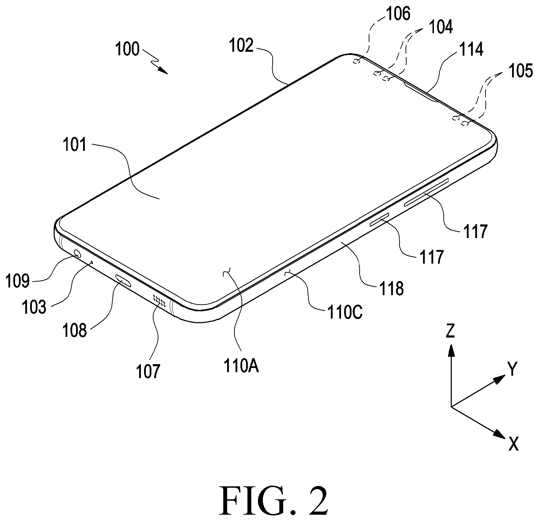

FIG. 2 is a perspective view illustrating a front surface of an electronic device 100 according to an embodiment of the disclosure.

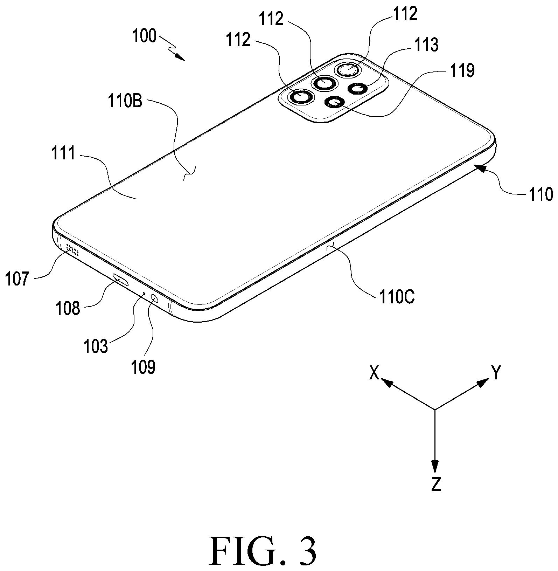

FIG. 3 is a perspective view illustrating a rear surface of the electronic device 100 illustrated in FIG. 2 according to an embodiment of the disclosure.

Referring to FIGS. 2 and 3, the electronic device 100 (e.g., the electronic device 1001 in FIG. 1) according to an embodiment may include a housing 110 which includes a first surface (or front surface) 110A, a second surface (or rear surface) 110B, and side surfaces 110C surrounding a space between the first surface 110A and the second surface 110B. In an embodiment (not shown), the housing 110 may refer to a structure that forms a portion of the first surface 110A of FIG. 2, the second surface 110B of FIG. 3, and the side surfaces 110C. According to an embodiment of the disclosure, at least a portion of the first surface 110A may be formed by a front plate 102 (e.g., a glass plate or polymer plate including various coating layers) at least a portion of which is substantially transparent. The second surface 110B may be formed by a rear plate 111 which is substantially opaque. The rear plate 111 may be formed of, for example, coated or tinted glass, ceramic, a polymer, a metal (e.g., aluminum, stainless steel (STS), or magnesium), or a combination of at least two of these materials. The side surfaces 110C may be coupled to the front plate 102 and the rear plate 111 and formed by a side structure (or "side bezel structure") 118 including a metal and/or a polymer. In an embodiment of the disclosure, the rear plate 111 and the side structure 118 may be integrally formed and include the same material (e.g., a metallic material, such as aluminum).

While not shown, the front plate 102 may include area(s) which are bent and extend seamlessly from at least a portion of an edge of the front plate 102 toward the rear plate 111. For example, the front plate 102 (or the rear plate 111) may include only one of the areas bent and extending toward the rear plate 111 (or the front plate 102) on an edge of one side of the first surface 110A. According to an embodiment of the disclosure, the front plate 102 or the rear plate 111 may have a substantially flat shape. For example, the rear plate 111 may not include any bent extended area. When including a bent extended area, the electronic device 100 may have a smaller thickness in a portion including the bent extended area than in any other portion.

According to an embodiment of the disclosure, the electronic device 100 may include at least one of a display 101, an audio module (e.g., a microphone hole 103, an external speaker hole 107, and a receiver hole 114 for calls), a sensor module (e.g., a first sensor module 104, a second sensor module (not shown), and a third sensor module 119), a camera module (e.g., a first camera device 105, a second camera device 112, and a flash 113), key input devices 117, a light emitting element 106, or connector holes (e.g., a first connector hole 108 and a second connector hole 109). In an embodiment of the disclosure, the electronic device 100 may not be provided with at least one (e.g., the key input devices 117 or the light emitting element 106) of the components or may additionally include other components.

The display 101 may output a screen or be visually exposed, for example, through a substantial portion of the first surface 110A (e.g., the front plate 102). In an embodiment of the disclosure, at least a portion of the display 101 may be exposed through the front plate 102 forming the first surface 110A or through a portion of a side surface 110C. In an embodiment of the disclosure, a corner of the display 101 may be formed substantially in the same shape as that of an adjacent periphery of the front plate 102. In an embodiment (not shown), a gap between the periphery of the display 101 and the periphery of the front plate 102 may be substantially equal to increase the visually exposed area of the display 101.

According to an embodiment (not shown) of the disclosure, a recess or an opening may be formed in a portion of a screen display area of the display 101, and at least one of the audio module (e.g., the receiver hole 114 for calls), the sensor module (e.g., the first sensor module 104), the camera module (e.g., the first camera device 105), or the light emitting element 106, which is aligned with the recess or the opening, may be included. In an embodiment (not shown), at least one of the audio module (e.g., the receiver hole 114 for calls), the sensor module (e.g., the first sensor module 104), the camera module (e.g., the first camera device 105), a fingerprint sensor (not shown), or the light emitting element 106 may be included on a rear surface of the screen display area of the display 101. In an embodiment (not shown), the display 101 may be incorporated with or disposed adjacent to a touch sensing circuit, a pressure sensor capable of measuring the intensity (pressure) of a touch, and/or a digitizer that detects a magnetic field-based stylus pen. In an embodiment of the disclosure, when the front plate 102 or the rear plate 111 includes bent and extended area(s), at least a portion of the sensor module (e.g., the first sensor module 104 and the third sensor module 119) and/or at least some of the key input devices 117 may be positioned in the bent and extended area(s).

The audio module 103, 107, and 114 may include the microphone hole 103 and the speaker hole (e.g., an external speaker hole 107 and the receiver hole 114 for calls). A microphone for obtaining an external sound may be disposed in the microphone hole 103, and in an embodiment of the disclosure, a plurality of microphones may be disposed to detect the direction of a sound. The speaker hole may include the external speaker hole 107 and the receiver hole 114 for calls. In an embodiment of the disclosure, the speaker hole (e.g., the external speaker hole 107 and the receiver hole 114 for calls) and the microphone hole 103 may be implemented as a single hole, or a speaker (e.g., a piezo speaker) may be included without the speaker hole (e.g., the external speaker hole 107 and the receiver hole 114 for calls).

The sensor module may generate an electrical signal or data value corresponding to an internal operating state of the electronic device 100 or an external environmental state. The sensor module may include, for example, the first sensor module 104 (e.g., a proximity sensor) and/or the second sensor module (not shown) (e.g., a fingerprint sensor) disposed on the first surface 110A, and/or the third sensor module 119 disposed on the second surface 110B of the housing 110. The second sensor module (not shown) (e.g., a fingerprint sensor) may be disposed on the second surface 110B or a side surface 110C as well as on the first surface 110A (e.g., the display 101) of the housing 110. The electronic device 100 may further include, for example, at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, or an illuminance sensor 124.

The camera module may include the first camera device 105 disposed on the first surface 110A of the electronic device 100, the second camera device 112 disposed on the second surface 110B of the electronic device 100, and/or the flash 113. The camera devices (e.g., the first camera device 105 and the second camera device 112) may include one or more lenses, an image sensor, and/or an ISP. The flash 113 may include, for example, a light emitting diode (LED) or a xenon lamp. In an embodiment of the disclosure, one or more lenses (an IR camera, a wide-angle lens, and a telephoto lens) and image sensors may be arranged on one surface of the electronic device 100. In an embodiment of the disclosure, the flash 113 may irradiate IR light, and the IR light irradiated from the flash 113 and reflected from a subject may be received through the third sensor module 119. The electronic device 100 or the processor (e.g., the processor 1020 in FIG. 1) of the electronic device 100 may detect depth information about the subject based on a time when the IR light is received at the third sensor module 119.

The key input devices 117 may be disposed on a side surface 110C of the housing 110. In an embodiment of the disclosure, the electronic device 100 may not include some or any of the key input devices 117, and the key input devices 117 which are not included may be implemented in other forms, such as soft keys on the display 101. In an embodiment of the disclosure, the key input devices may include a sensor module disposed on the second surface 110B of the housing 110.

The light emitting element 106 may be disposed, for example, on the first surface 110A of the housing 110. The light emitting element 106 may provide, for example, state information about the electronic device 100 in the form of light. In an embodiment of the disclosure, the light emitting element 106 may provide, for example, a light source interworking with an operation of the camera module (e.g., the first camera device 105). The light emitting element 106 may include, for example, an LED, an IR LED, and a xenon lamp.

The connector holes (e.g., the first connector hole 108 and the second connector hole 109) may include the first connector hole 108 capable of accommodating a connector (e.g., a universal serial bus (USB) connector) for transmitting and receiving power and/or data to and from an external electronic device (e.g., the external electronic device 1002 in FIG. 1) and/or the second connector hole (e.g., an earphone jack) 109 capable of accommodating a connector for transmitting and receiving an audio signal to and from an external electronic device.

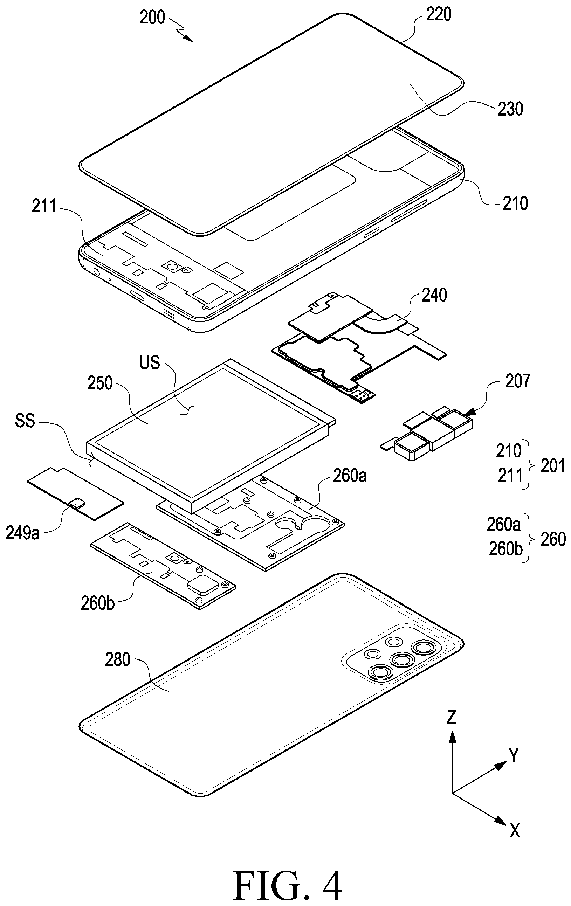

FIG. 4 is an exploded perspective view illustrating a front surface of an electronic device 200 (e.g., the electronic device 100 in FIG. 2) according to an embodiment of the disclosure.

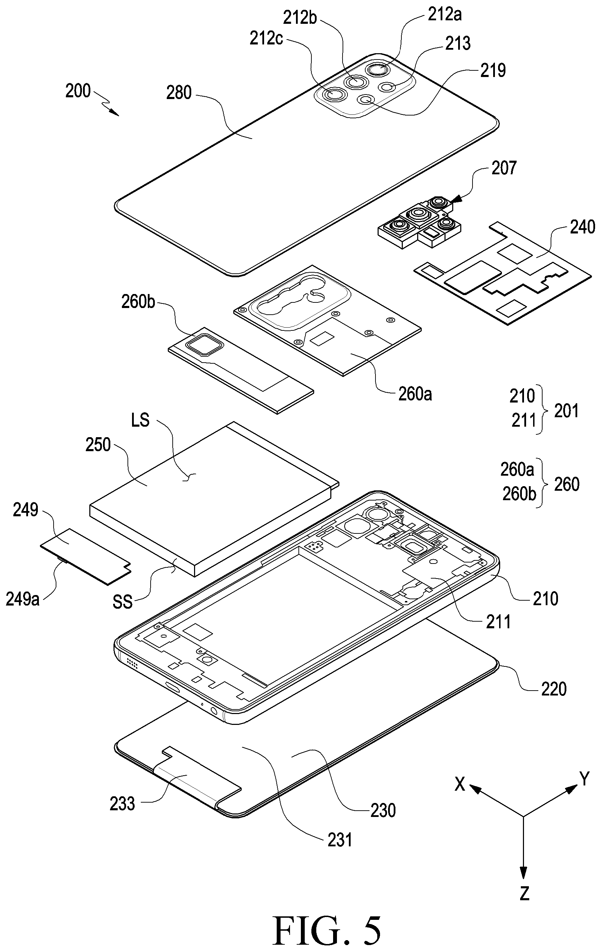

FIG. 5 is an exploded perspective view illustrating a rear surface of the electronic device 200 (e.g., the electronic device 100 in FIG. 2) according to an embodiment of the disclosure.

Referring to FIGS. 4 and 5, the electronic device 200 (e.g., the electronic device 1001 or the external electronic device 1002, 1004, or 100 in FIG. 1, 2, or 3) may include a side structure 210, a first support member 211 (e.g., a support plate or a bracket), a front plate 220 (e.g., the front plate 102 in FIG. 2), a display 230 (e.g., the display 101 in FIG. 2), a PCB (or a board assembly) 240, a battery 250, a second support member 260 (e.g., a rear case), an antenna (not shown) (e.g., the antenna module 1097 in FIG. 1), a camera assembly 207, and a rear plate 280 (e.g., the rear plate 111 in FIG. 3). In an embodiment of the disclosure, the electronic device 200 may not be provided with at least one of the components (e.g., the first support member 211 or the second support member 260) or may additionally include other components. At least one of the components of the electronic device 200 may be the same as or similar to at least one of the components of the electronic device 100 in FIG. 2 or 3, and a redundant description will be avoided.

According to an embodiment of the disclosure, the first support member 211 may be disposed inside the electronic device 200 and connected to the side structure 210, or may be formed integrally with the side structure 210. The first support member 211 may be formed of, for example, a metallic material and/or a non-metallic (e.g., polymer) material. When the first support member 211 is at least partially formed of a metallic material, a portion of the side structure 210 or the first support member 211 may function as an antenna. In an embodiment of the disclosure, the first support member 211 may have a substantially flat shape and may be understood as a support plate. In an embodiment of the disclosure, the first support member 211 may provide a space (e.g., a recess or a hole) in which an internal electronic component, such as the battery 250 may be accommodated.

According to an embodiment of the disclosure, the first support member 211 may have one surface coupled to the display 230 and the other surface coupled to the PCB 240 and/or the battery 250. A processor (e.g., the processor 1020 in FIG. 1), memory (e.g., the memory 1030 in FIG. 1), and/or an interface (e.g., the interface 1077 in FIG. 1) may be mounted on the PCB 240. The processor may include, for example, at least one of a CPU, an AP, a GPU, an ISP, a sensor hub processor, or a CP. In an embodiment of the disclosure, the processor and/or the memory may refer to one of circuit devices mounted on an IC chip.

According to one embodiment of the disclosure, the electronic device 200 may further include at least one auxiliary circuit board 249 separate from the PCB 240. The auxiliary circuit board 249 may include, for example, a connector 249a (e.g., the connecting terminal 1078 in FIG. 1) for connection with an external electronic device or for power supply. In an embodiment of the disclosure, the connector 249a may be disposed inside the housing 201 to correspond to the first connector hole 108 of FIG. 2. In an embodiment of the disclosure, the input module 1050 (e.g., a microphone) or the sound output module 1055 (e.g., a speaker) in FIG. 1, and an antenna (not shown) may be disposed around the auxiliary circuit board 249, and these electrical/electronic components may be electrically connected to the PCB 240 via the auxiliary circuit board 249.

According to an embodiment of the disclosure, the first support member 211 and the side structure 210 may be combined and referred to as a front case or housing 201. According to an embodiment of the disclosure, the housing 201 may be generally understood as a structure for accommodating, protecting, or disposing the PCB 240 or the battery 250 therein. In an embodiment of the disclosure, the housing 201 may be understood as including a structure visually or tactilely recognizable to a user from the outside of the electronic device 200, for example, the side structure 210, the front plate 220, and/or the rear plate 280.

According to an embodiment of the disclosure, 'a front or rear surface of the housing 201' may refer to the first surface 110A of FIG. 2 or the second surface 110B of FIG. 3. In an embodiment of the disclosure, the first support member 211 may be understood as a support plate disposed between the front plate 220 (e.g., the first surface 110A in FIG. 2) and the rear plate 280 (e.g., the second surface 110B in FIG. 3). In an embodiment of the disclosure, the first support plate 211 may function as a structure for disposing electrical/electronic components, such as the PCB 240 or the camera assembly 207 thereon. In an embodiment of the disclosure, when the first support plate 211 is disposed in a space between the front plate 220 and the rear plate 280, the display 230 may be understood as being disposed on an upper surface or front surface of the support member 211, and the battery 250 may be understood as being disposed on a lower surface or rear surface of the support member 211.

The display 230 may include a display panel 231 and a flexible PCB (FPCB) 233 extending from the display panel 231. For example, the FPCB 233 may be understood as being at least partially disposed on a rear surface of the display panel 231 and electrically connected to the display panel 231. In an embodiment of the disclosure, reference number '231' may be understood as indicating a protection sheet disposed on the rear surface of the display panel. For example, unless otherwise specified in the following detailed description, the protection sheet may be understood as a portion of the display panel 231. In an embodiment of the disclosure, the protection sheet may function as a buffering structure (e.g., a low-density elastomer, such as a sponge) or an electromagnetic shielding structure (e.g., a copper (CU) sheet), which absorbs an external force. According to an embodiment of the disclosure, the display 230 may be disposed on an inner surface of the front plate 220 and include a light emitting layer to display a screen through at least a portion of the first surface 110A of FIG. 2 or the front plate 220. As mentioned before, the display 230 may output a screen substantially through the entire area of the first surface 110A of FIG. 2 or the front plate 220.

The memory may include, for example, volatile memory or non-volatile memory.

The interface may include, for example, a high definition multimedia interface (HDMI), a USB interface, a secure digital (SD) card interface, and/or an audio interface. For example, the interface may electrically or physically connect the electronic device 200 to an external electronic device, and include a USB connector, an SD card/MMC connector, or an audio connector.

The second support member 260 may include, for example, an upper support member 260a and a lower support member 260b. In an embodiment of the disclosure, the upper support member 260a may be disposed to surround the PCB 240 together with a portion of the first support member 211. For example, the PCB 240 may be disposed substantially between the first support member 211 and the second support member 260 (e.g., the upper support member 260a). Circuit devices (e.g., a processor, a communication module, or memory) implemented in the form of integrated circuit chips or various electrical/electronic components may be disposed on the PCB 240. According to an embodiment of the disclosure, an electromagnetic shielding environment may be provided to the PCB 240 by the upper support member 260a. In an embodiment of the disclosure, at least one shield can may be disposed on the PCB 240. For example, the shield can may provide an electromagnetic shielding environment in a partial area or space on the PCB 240. In an embodiment of the disclosure, the shield can may be disposed to surround at least a portion of an IC chip on which the processor, the memory, and/or the communication module is mounted.

According to an embodiment of the disclosure, the lower support member 260b may be used as a structure for disposing electrical/electronic components, such as the auxiliary circuit board 249, a speaker module, and an interface (e.g., a USB connector, an SD card/MMC connector, or an audio connector) thereon. In an embodiment of the disclosure, electrical/electronic components, such as a speaker module and an interface (e.g., a USB connector, an SD card/MMC connector, or an audio connector) may be disposed on an additional PCB, for example, the auxiliary circuit board 249. For example, the lower support member 260b may be disposed to surround the additional PCB together with another portion of the first support member 211. The speaker module or the interface disposed on the auxiliary circuit board 249 or the lower support member 260b may be disposed to correspond to the audio module (e.g., the microphone hole 103 or the speaker hole (e.g., the external speaker hole 107 and the receiver hole 114 for calls)) or the connector holes (e.g., the first connector hole 108 and the second connector hole 109).

The battery 250, which is a device for supplying power to at least one component of the electronic device 200, may include, for example, a non-rechargeable primary battery, a rechargeable secondary battery, or a fuel cell. At least a portion of the battery 250 may be disposed, for example, on substantially the same plane as the PCB 240. The battery 250 may be disposed integrally within the electronic device 200, or detachably from the electronic device 200. In an embodiment of the disclosure, the battery 250 may be understood as substantially attached to the rear surface of the support plate (e.g., the first support member 211).

While not shown, the antenna may include a conductor pattern implemented on a surface of the first support member 211 and/or a surface of the second support member 260 through, for example, laser direct structuring (LDS). In an embodiment of the disclosure, the antenna may include a printed circuit pattern formed on a surface of a thin film, and the antenna in the form of a thin film may be disposed between the rear plate 280 and the battery 250. The antenna may include, for example, a near field communication (NFC) antenna, a wireless charging antenna, and/or a magnetic secure transmission (MST) antenna. For example, the antenna may perform short-range communication with an external device or wirelessly transmit and receive power required for charging to and from an external device. In an embodiment of the disclosure, another antenna structure may be formed by a portion or combination of the side structure 210 and/or the first support member 211.

The camera assembly 207 may include at least one camera module. Inside the electronic device 200, the camera assembly 207 may detect at least a portion of light incident through an optical hole or camera windows 212a, 212b, 212c, 213, and 219. In an embodiment of the disclosure, the camera assembly 207 may be disposed on the first support member 211 at a position adjacent to the PCB 240. In an embodiment of the disclosure, the camera module(s) of the camera assembly 207 may be generally aligned with any one of the camera windows 212a, 212b, 212c, 213, and 219 and at least partially surrounded by the second support member 260 (e.g., the upper support member 260a).

In describing the following embodiments of the disclosure, the configuration of the electronic device 1001 or the external electronic devices 1002, 1004, 100, and 200 described above may be referred to. Even if not directly mentioned, the configuration of the foregoing embodiment may be similarly applied to the embodiment described below. It is to be noted that the Cartesian coordinate system referred to in the embodiment described above and/or described below is an example for brevity of description, and the embodiment(s) of the disclosure are not limited thereto. For example, the Cartesian coordinate system mentioned in the disclosure may be defined differently depending on the shape (e.g., bar type, foldable type, rollable type, and/or slide type) of an electronic device to be actually manufactured, the user's usage habits, and/or the orientation of the electronic device.

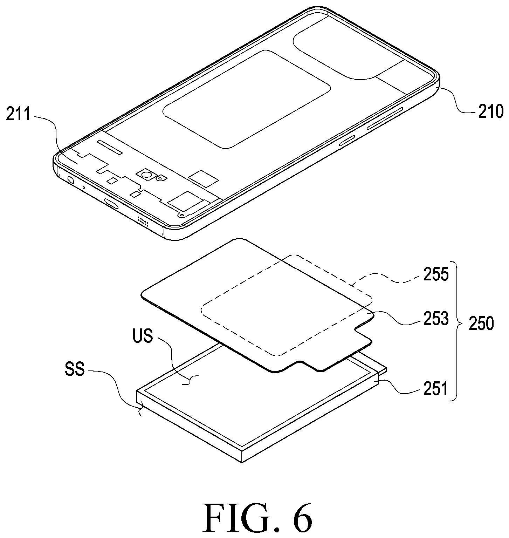

FIG. 6 is an exploded perspective view illustrating arrangement of a battery pack in an electronic device according to an embodiment of the disclosure.

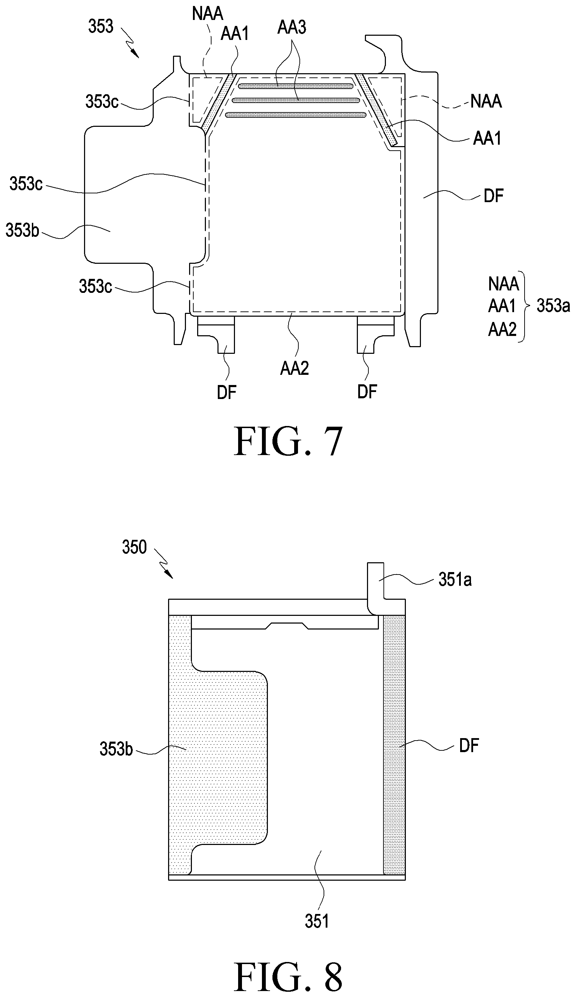

Referring further to FIG. 6, the battery pack (e.g., the battery 250) may include a body 251 and adhesive tape(s) 253 and 255 that dispose or attach the body 251 on or to a support plate (e.g., the first support member 211). The body 251 may include, for example, a pouch or case that accommodates a positive electrode material, a negative electrode material, and/or a separator, and the pouch or case may be sealed after an electrolyte is injected into it. The battery 250 may be substantially the same as the battery 1089 of FIG. 1. Although not given a separate reference number, the battery 250 and/or the body 251 may include a protection circuit assembly provided on one side of the pouch or case. The protection circuit assembly may include an FPCB (e.g., an FPCB 351a in FIG. 8) electrically connected to a circuit board (e.g., the PCB 240 in FIG. 4) of the electronic device 200. In an embodiment of the disclosure, the adhesive tape(s) 253 and 255 may be disposed at least partially between the body 251 and the first support member 211 to attach the body 251 to the first support member 211.

According to an embodiment of the disclosure, the body 251 may be described as including an upper surface US (or a front surface) facing the first support member 211, a lower surface LS (see FIG. 5) (or a rear surface) facing in a direction opposite to the upper surface US, and a side surface SS connecting the upper surface US and the lower surface LS. The adhesive tape(s) 253 and 255 may be understood as disposed to face a lower surface or rear surface of the first support member 211, while facing the upper surface US of the body 251, for example. For brevity of description, the 'upper surface' and the 'lower surface' are referred to. However, it is to be noted that the embodiment(s) of the disclosure are not limited thereto. For example, in the embodiment described below, the 'the upper surface US of the battery 250 or the body 251' is not limited to referring to a surface positioned above the other portions, and may refer to a surface facing (or attached to) the support plate (e.g., the first support member 211).

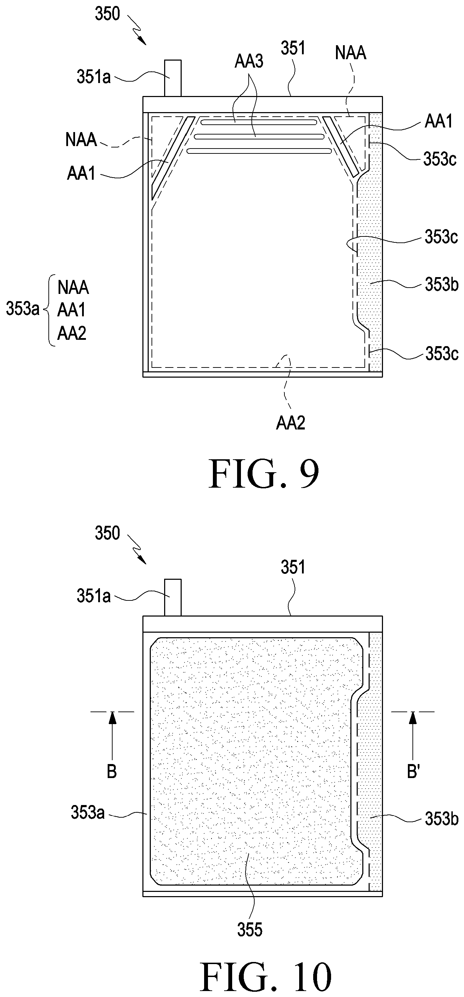

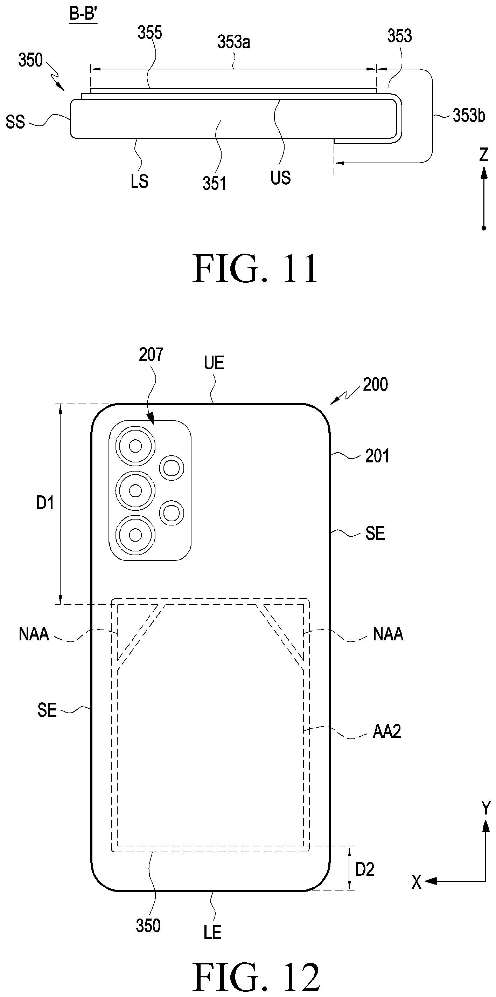

According to an embodiment of the disclosure, the battery 250 may include a first adhesive tape 253 and a second adhesive tape 255 (e.g., a fixing tape 355 in FIG. 10 or FIG. 11). When the first adhesive tape 253 is a double-sided tape, the second adhesive tape 255 may be omitted, and the first adhesive tape 253 may be provided with an adhesive layer on the surface where the second adhesive tape 255 of FIG. 6 is provided. The first adhesive tape 253 is attached substantially to the upper surface US of the body 251, and the second adhesive tape 255 may attach the first adhesive tape 253 and/or the body 251 to the first support member 211.

As will be described with reference to FIG. 7, the first adhesive tape 253 may include a second area (e.g., 353b in FIG. 7 or FIG. 8) extending to the side surface SS and/or the lower surface LS of the body 251. A portion of the second area 353b may be located on the upper surface US of the body 251, and in an embodiment of the disclosure, may be disposed to extend from the upper surface US of the body 251 to the lower surface LS, while surrounding the side surface SS. This configuration of the first adhesive tape 253 may provide an environment facilitating the battery 250 to be separated from the support plate (e.g., the first support member 211) during a repair process, such as replacement of the battery 250. For example, a worker or a user may pull the second area 353b to separate the body 251 from the first support member 211.

According to an embodiment of the disclosure, when the body 251 is separated from the first support member 211, the second adhesive tape 255 may be substantially maintained attached to the first support member 211. In an embodiment of the disclosure, when the body 251 is separated from the first support member 211, a portion (e.g., a first area 353a in FIG. 7) of the first adhesive tape 253 may be maintained attached to the first support member 211 or the second adhesive tape 255, and another portion (e.g., the second area 353b in FIG. 7) of the first adhesive tape 253 may be maintained attached to the body 251 while being separated from the first support member 211. In an embodiment of the disclosure, the second area 353b may be omitted, and when the second area 353b is omitted, the first adhesive tape 253 may have a shape corresponding to the upper surface US of the body 251 or a shape corresponding to the second adhesive tape 255.

In an embodiment of the disclosure, distortion deformation may occur in the first support member 211 and/or the battery 250 due to an external force or impact. This deformation may generally be restored to an initial manufactured shape or an initial assembled state by a restoring force of the first support member 211. In an embodiment of the disclosure, the degree of deformation of the first support member 211 may vary depending on a distance from a point where the external force is applied in the distortion deformation. For example, a portion of an attached portion between the first support member 211 and the battery 250 may be temporarily separated. Noise may be generated due to an adhesive component during separation/re-adhesion resulting from the deformation and restoration. Reparation/re-adhesion between the first support member 211 and the battery 250 due to an external force may frequently occur at an edge of the adhesive tape(s) 253 and 255. According to embodiment(s) of the disclosure, at least a portion of the edge of the adhesive tape(s) 253 and 255 may include a non-adhesive area (e.g., a non-adhesive area NAA in FIG. 7), so that even if there is deformation to an extent that separation/reattachment occurs, the generation of noise may be suppressed.

A battery pack (e.g., a battery pack 350 in FIGS. 8 to 11) and/or an adhesive tape (e.g., a first adhesive tape 353 and/or the fixing tape 355 in FIGS. 7 to 11) according to embodiment(s) of the disclosure will be described with reference to FIGS. 7 to 12.

FIG. 7 is a diagram illustrating one surface of a first adhesive tape in an electronic device and/or a battery pack according to an embodiment of the disclosure.

Referring to FIG. 7, the first adhesive tape 353 (e.g., the first adhesive tape 253 in FIG. 6) may include the first area 353a providing non-adhesive area(s) NAA and adhesive area(s) AA1, AA2, and AA3. The first area 353a may have a shape corresponding to, for example, an upper surface (e.g., the upper surface US in FIG. 6) of a battery body (e.g., the body 251 in FIG. 6 or a body 351 in FIG. 8) and a smaller area than the upper surface of the battery body. For example, as a portion of the second area 353b described below is positioned together with the first area 353a on the upper surface of the body 351, the first area 353a may have a smaller area than the upper surface of the body 351. In an embodiment of the disclosure, the width or length of the first area 353a may be provided to be smaller than that of the upper surface of the body 351, so that the area of the first area 353a may be smaller than the area of the upper surface of the body 351. In an embodiment of the disclosure, a non-adhesive area NAA, a first adhesive area AA1, and/or a second adhesive area AA2 described below may be provided in the first area 353a. For example, the first area 353a may refer to a portion on the first adhesive tape 353 where the non-adhesive area NAA, the first adhesive area AA1, and/or the second adhesive area AA2 is disposed. In an embodiment of the disclosure, the first area 353a may be disposed to substantially face the upper surface of the body 351.

According to an embodiment of the disclosure, the first area 353a may be understood as an area facing the upper surface (e.g., the upper surface US in FIG. 6) of the body 351 (e.g., the body 251 in FIG. 6) and/or a portion disposed between the body 351 and a support plate (e.g., the first support member 211 in FIG. 6). For example, the first area 353a may function as a portion that attaches the body 351 to the first support member 211, together with a second adhesive tape (e.g., the second adhesive tape 255 in FIG. 6 or the fixing tape 355 in FIG. 10). In an embodiment of the disclosure, when an adhesive layer replacing the second adhesive tape 255 or the fixing tape 355 is provided on one surface of the first area 353a, the first area 353a itself may function as a portion that attaches the body 351 to the first support member 211.

According to an embodiment of the disclosure, when the second adhesive tape 255 or the adhesive layer is defined as being provided on one surface of the first area 353a, the non-adhesive area NAA, the first adhesive area AA1, and/or the second adhesive area AA2 may be understood as being provided on the other surface of the first area 353a. In an embodiment of the disclosure, the surface on which the non-adhesive area NAA, the first adhesive area AA1, and/or the second adhesive area AA2 is provided may be understood as a surface facing the upper surface of the body 351 out of both surfaces of the first area 353a. For example, the non-adhesive area NAA, the first adhesive area AA1, and/or the second adhesive area AA2 may be disposed to substantially face the upper surface of the body 351 and/or in direct contact with the upper surface of the body 351. As mentioned before, it is to be noted that the upper surface of the body 351 is not limited to a surface disposed above the other portions of the body 351, but refers to a surface disposed to face the first support member 211.

According to an embodiment of the disclosure, the non-adhesive area NAA may be provided at least in a portion of an edge of the first area 353a. For example, the first adhesive area AA1 and the second adhesive area AA2 may be implemented by providing or applying an adhesive material to the surface facing the upper surface of the body 351 out of both surfaces of the first area 353a, and at least a portion of an edge of the first area 353a may be provided as the non-adhesive area NAA to which the adhesive material is not applied. In an embodiment of the disclosure, when the first area 353a has a polygonal shape, the non-adhesive area NAA may be provided in at least one of corner portions formed by two sides of the first area 353a. The illustrated embodiment may exemplify non-adhesive areas NAAs disposed at two adjacent (or neighboring) corner portions among corner portions. As mentioned before, when distortion deformation occurs due to an external force, a deformation deviation may occur on the support plate (e.g., the first support member 211 in FIG. 6). In an embodiment of the disclosure, the non-adhesive area(s) NAA may be provided at a portion with relatively large deformation on the support plate (e.g., the first support member 211 in FIG. 6), when distortion deformation occurs. For example, as the non-adhesive area(s) NAA is disposed, noise caused by separation or reattachment of the adhesive material may be suppressed even when deformation occurs due to an external force.

According to an embodiment of the disclosure, the first adhesive area AA1 may be disposed substantially in contact with the non-adhesive area NAA in the first area 353a, while providing a first adhesive force. The phrase "disposed in contact" may refer to a state in which an edge of one area (e.g., the first adhesive area AA1) and an edge of another area (e.g., the non-adhesive area NAA) are disposed in direct contact with each other. For example, the first adhesive tape 353 and/or the first area 353a may be attached or fixed to the upper surface of the body 351 by attaching the first adhesive area AA1 to the upper surface of the body 351 by the first adhesive force. When non-adhesive areas NAA are respectively provided at two adjacent corner portions of first areas 353a, each first adhesive area AA1 may be disposed in contact with a corresponding one of the non-adhesive areas NNA. For example, the number of non-adhesive areas NAA and/or the number of first adhesive areas AA1 are not limited by the illustrated embodiment of the disclosure, and may be appropriately selected according to the specifications of an electronic device (e.g., the electronic device 1001, 100, and 200 in FIGS. 1 to 5) to be actually manufactured and/or a battery pack (e.g., the battery 1089 or 250 in FIG. 1 or FIG. 4 or the battery pack 350 in FIG. 8).

According to an embodiment of the disclosure, the first adhesive area AA1 may have a shape extending substantially along a straight trajectory. When a plurality of first adhesive areas AA1 are provided, the first adhesive areas AA1 may be arranged to be inclined with respect to each other. In an embodiment of the disclosure, when a plurality of first adhesive areas AA1 are provided, it may be understood that the first adhesive areas AA1 are arranged symmetrically with respect to each other on the body 351, while being inclined with respect to the length direction of the electronic device 200 (e.g., the Y-axis direction in FIG. 4). However, it is to be noted that the embodiment(s) of the disclosure are not limited thereto, and when the first adhesive areas AA1 are arranged at different distances from edges (e.g., side ends SE in FIG. 12) of the electronic device 200, the first adhesive areas AA1 may be arranged asymmetrically on the body 351. For example, as will be described with reference to FIG. 12, when a plurality of non-adhesive areas NAA (or first adhesive areas AA1) are arranged at different positions on the electronic device, their sizes and shapes may be different depending on the positions.

According to an embodiment of the disclosure, the second adhesive area AA2 may be attached to the upper surface of the body 351, while providing a second adhesive force smaller than the first adhesive force. In an embodiment of the disclosure, the second adhesive area AA2 may be provided substantially over the entire first area 353a, excluding the non-adhesive area NAA and the first adhesive area AA1. For example, the first area 353a and/or the first adhesive tape 353 may be attached to the body 351 substantially by the first adhesive area AA1 and the second adhesive area AA2. In an embodiment of the disclosure, the second adhesive area AA2 may be disposed in contact with at least the first adhesive area AA1 out of the non-adhesive area NAA and the first adhesive area AA1. In an embodiment of the disclosure, when the first adhesive area AA1 has a smaller length than in the illustrated embodiment of the disclosure, the second adhesive area AA2 may be disposed in contact with the first adhesive area AA1, while contacting the non-adhesive area NAA. In an embodiment of the disclosure, an adhesive may be disposed on the second adhesive area AA2 such that the adhesive forms dots of a specified size, and the dots may be arranged at a specified interval.

In an embodiment of the disclosure, as the first adhesive area AA1 provides a greater adhesive force than the second adhesive area AA2, while being substantially in contact with the non-adhesive area NAA, the first adhesive tape 353 may be stably adhered to the upper surface of the body 351. For example, the generation of noise due to distortion deformation may be suppressed by providing the non-adhesive area NAA, and the first adhesive tape 353 may have a sufficient adhesive force by providing the first adhesive area AA1. In an embodiment of the disclosure, the first adhesive tape 353 may further include at least one third adhesive area AA3 that provides a third adhesive force greater than the second adhesive force. The third adhesive force may be, for example, substantially the same as the first adhesive force. In an embodiment of the disclosure, the second adhesive tape 255 of FIG. 6 or the fixing tape 355 of FIG. 10 may be replaced with a fourth adhesive area (e.g., an adhesive layer) provided in the first area 353a on the surface facing the support plate. For example, in the embodiment of the disclosure illustrated in FIG. 6 or FIG. 10, a configuration is illustrated in which the second adhesive tape 255 or the fixing tape 355 is provided separately from the first adhesive tape 355. However, it may be understood that the second adhesive tape 255 or the fixing tape 355 is omitted, and the first adhesive tape 353 provides the fourth adhesive area.

According to an embodiment of the disclosure, the third adhesive area AA3 may be disposed at least partially in contact with the second adhesive area AA2 in the first area 353a. In an embodiment of the disclosure, the third adhesive area AA3 may be understood as being disposed in contact with the second adhesive area AA2 while extending along an edge of the first area 353a. In an embodiment of the disclosure, when non-adhesive areas NAA and/or first adhesive areas AA1 are provided at two adjacent corner portions among the corner portions of the first area 353a, the third adhesive area AA3 may extend along the edge of the first area 353a between the first adhesive areas AA1. When the first adhesive areas AA1 are defined as extending in the length direction (e.g., the Y-axis direction in FIG. 4) to be inclined with respect to each other in the embodiment of FIG. 7, third adhesive area(s) AA3 may be understood as extending perpendicularly to the length direction.

According to an embodiment of the disclosure, the battery pack 350 and/or the first adhesive tape 353 may further include the second area 353b. The second area 353b may be for facilitating separation of the battery pack 350 or the body 351 of FIG. 8 from the support plate (e.g., the first support member 211 in FIG. 6), when repair or replacement of the battery pack 350 is required, for example. For example, a worker or a user may pull the second area 353b to separate the body 351 or the battery pack 350 from the first support member 211. As will be described with reference to FIGS. 8 to 11, the second area 353b may extend from one side of the first area 353a, and may be disposed in contact with at least a portion of the upper surface (e.g., the upper surface US in FIG. 4 or FIG. 6) of the body 351, at least a portion of the side surface (e.g., the side surface SS in FIG. 4 or FIG. 6) of the body 351, and/or at least a portion of the lower surface (e.g., the lower surface LS in FIG. 5) of the body 351. In an embodiment of the disclosure, the second area 353b may be provided substantially attached to an outer perimeter surface of the body 351. In an embodiment of the disclosure, a portion of the second area 353b that contacts the lower surface of the body 351 may be attached to the body 351 with an adhesive force substantially smaller than the first adhesive force. In an embodiment of the disclosure, a portion of the second area 353b that contacts the lower surface of the body 351 may be provided with an adhesive substantially the same as that of the second adhesive area AA2, and the distribution density of dots implemented with the adhesive may be smaller than that of the second adhesive area AA2. For example, a worker or a user may easily separate the second area 353b from the lower surface of the body 351.

According to an embodiment of the disclosure, the battery pack 350 and/or the first adhesive tape 353 may further include slits 353c and/or cut grooves. In an embodiment of the disclosure, the slits 353c or the cut grooves may be arranged or extended along a boundary between the first area 353a and the second area 353b. The slits 353c may be formed, for example, to substantially penetrate the first adhesive tape 353, and the cut grooves may make the thickness of the first adhesive tape 353 at the boundary between the first area 353a and the second area 353b smaller than that of other portions. For example, when an external force (e.g., tension) is applied to the first adhesive tape 353, the second area 353b may be separated from the first area 353a along the slits 353c or the cut grooves.

In an embodiment of the disclosure, when a worker or a user pulls the battery pack 350 using the second area 353b to separate the battery pack 350 from the support plate (e.g., the first support member 211 in FIG. 6), the second area 353b may be separated from the first area 353a, while being cut along the slits 353c or the cut grooves. In an embodiment of the disclosure, a force acting on the second area 353b from a time point of separation from the first area 353a may act as a force that substantially separates the body 351 from the support plate. For example, in the separating operation, the second area 353b may be separated together with the body 351 from the first support member 211, and the first area 353a may be maintained attached to the first support member 211. When the slits 353c or the cut grooves are not provided, the first area 353a may be substantially separated together with the body 351 from the fixing tape 355 and/or the first support member 211.

According to an embodiment of the disclosure, the battery pack 350 and/or the first adhesive tape 353 may further include dummy flag(s) DF. The dummy flag(s) DF may be, for example, a portion extending from an edge of the first area 353a and attached to a side surface of the body 351. For example, the first area 353a and the dummy flag(s) DF may function as an area attaching or fixing the first adhesive tape 353 to the body 351. In an embodiment of the disclosure, a portion of the dummy flag(s) DF may be disposed in contact with the lower surface of the body 351, as illustrated in FIG. 8.

FIG. 8 is a first plan view illustrating a first adhesive tape disposed on a battery body in an electronic device and/or a battery pack according to an embodiment of the disclosure.

FIG. 9 is a second plan view illustrating a first adhesive tape disposed on a battery body in an electronic device and/or a battery pack according to an embodiment of the disclosure.

FIG. 10 is a plan view illustrating a fixing tape disposed in an electronic device and/or a battery pack according to an embodiment of the disclosure.

FIG. 11 is a diagram illustrating a battery pack taken along line B-B' of FIG. 10 according to an embodiment of the disclosure.

FIG. 8 illustrates, for example, the lower surface of the battery pack 350, with the first adhesive tape 353 attached to the body 351, and FIG. 9 illustrates the upper surface of the battery pack 350, with the first adhesive tape 353 attached to the body 351. In an embodiment of the disclosure, the upper surface of the body 351 or the first area 353a of the first adhesive tape 353 may be understood as a portion attached to a support plate (e.g., the first support member 211 in FIG. 6). In an embodiment of the disclosure, the body 351 may be electrically connected to a circuit board (e.g., the PCB 240 in FIG. 4) of an electronic device (e.g., the electronic device 200 in FIG. 4) by including the FPCB 351a and/or a protection circuit assembly that is not assigned a reference number.

Referring to FIGS. 8 to 11, the first area 353a may be substantially disposed on the upper surface of the body 351, and the second area 353b may be disposed on a portion of the upper surface of the body 351, while surrounding a portion of a side surface of the body 351. Unless forced by a worker or a user, the first area 353a and/or the second area 353b may be maintained substantially attached to the body 351. In an embodiment of the disclosure, non-contact areas NAA may be provided at two adjacent corner portions of first areas 353a and/or the upper surface of the body 351, respectively. However, the embodiment(s) of the disclosure are not limited thereto, and any one of the illustrated non-contact areas NAAs may be omitted, or an additional non-contact area may be provided in at least one of corner portions at positions that are not illustrated.

According to an embodiment of the disclosure, the first area 353a may be generally attached to the body 351 by the second adhesive area AA2, and in a portion where the non-contact area NAA is provided, the first adhesive area AA1 may also be provided, so that the first area 353a is more stably attached to the body 351. For example, the first adhesive area AA1 may provide a greater adhesive force than the second adhesive area AA2. The second adhesive area AA2 may be disposed substantially in contact with at least the first adhesive area AA1 out of the non-contact area NAA and the first adhesive area AA1. In an embodiment of the disclosure, the second area 353b may be provided to contact a portion of the upper surface of the body 351, and when the first adhesive tape 353 includes the dummy flag(s) DF, a portion of the dummy flag(s) DF may be attached to the upper surface of the body 351.

As mentioned before, the battery pack 350 may further include the fixing tape 355 (e.g., the second adhesive tape 255 in FIG. 6). The fixing tape 355 may be disposed to face the body 351, with the first adhesive tape 353 (e.g., the first area 353a) interposed therebetween, and substantially attach the first adhesive tape 353 and/or the body 351 to the support plate (e.g., the first support member 211 in FIG. 6). In an embodiment of the disclosure, the fixing tape 355 may be replaced with an adhesive material provided in the first area 353a. In this case, the first adhesive tape 353 may be understood as including a fourth adhesive area.

FIG. 12 is a diagram illustrating arrangement of a battery pack in an electronic device according to an embodiment of the disclosure.

Referring further to FIG. 12, the battery pack 350 (e.g., battery 250 in FIG. 6 or the battery pack 350 in FIGS. 8 to 11) may be disposed or fixed on the support plate (e.g., the first support member 211 in FIG. 6) in the electronic device 200. In an embodiment of the disclosure, the electronic device 200 may include the camera module 207 (e.g., the first camera device 105 in FIG. 2 or the camera assembly 207 in FIG. 4) disposed in an area between an upper end UE of the housing 201 and the battery pack 350. Inside the electronic device 200, the camera module 207 may be disposed on one surface or the other surface of the support plate (e.g., first support member 211 in FIG. 6).

In an embodiment of the disclosure, the battery pack 350 and/or the non-adhesive area NAA may be disposed at a first distance D1 from the upper end UE of the housing 201, and the battery pack 350 and/or the second adhesive area AA2 may be disposed at a second distance D2 from a lower end LE of the housing 201. In an embodiment of the disclosure, the second adhesive area AA2 may be understood as being disposed at the first distance D1 from the upper end UE of the housing 201. In an embodiment of the disclosure, the first distance D1 may be greater than the second distance D2. For example, a space in which the camera module 207 is disposed may be provided in an area between the upper end UE of the housing 201 and the battery pack 350. In an embodiment of the disclosure, the length of the housing 201 may be defined as the distance from the upper end UE of the housing 201 to the lower end LE of the housing 201, and the sum of the first distance D1 and the second distance D2 may be less than the length of the housing 201.

According to an embodiment of the disclosure, the battery pack 350 may include an additional non-adhesive area located at the second distance D2 from the lower end of the housing 201. However, instead of the non-adhesive area, the second adhesive area AA2 may be provided at a position close to the lower end LE of the housing 201, thereby providing a greater adhesive force between the battery pack 350 and the first support member 211. Although not shown in FIG. 12, the battery pack 350 and/or the first adhesive tape (e.g., the first adhesive tape 353 in FIG. 7) may include the first adhesive area AA1 provided in contact with the non-adhesive area NAA, and the first adhesive area AA1 may provide a greater adhesive force than the second adhesive area AA2.

According to an embodiment of the disclosure, non-adhesive areas NAA and/or the second adhesive area AA2 may be disposed at substantially the same distance from both side ends SE of the housing 201. For example, when a plurality of non-adhesive areas NAAs are provided, the non-adhesive areas NAAs may be arranged at symmetrical positions on the electronic device 200. In an embodiment of the disclosure, it is to be noted that even if a plurality of non-adhesive areas NAAs are provided, the disclosure is not limited to positions or shapes of the non-adhesive areas NAAs being symmetrical.

According to an embodiment of the disclosure, when the battery pack 350 and/or the first area 353a in FIG. 7 has a polygonal shape, the non-adhesive area NAA may be provided at least at one corner portion formed by two sides of the battery pack 350 and/or the first area 353a in FIG. 7, in order of proximity to the upper end UE of the housing 201. In the illustrated embodiment of the disclosure, a configuration in which two non-adhesive areas NAA are disposed at the first distance D1 from the upper end UE of the housing 201 may be exemplified. For example, non-adhesive areas NAA may be provided at two adjacent corner portions of first areas 353a, and the two non-adhesive areas NAA may be located at substantially the same distance (e.g., the first distance D1) from the upper end UE of the housing 201.

According to an embodiment of the disclosure, when distortion deformation occurs due to an external force, separation or re-adhesion from or to the support plate (e.g., the first support member 211 in FIG. 6) may occur at corner portions of the battery pack 350 and/or the first area 353a. The battery pack 350 and/or the electronic device 200 including the same according to embodiment(s) of the disclosure may suppress separation/re-adhesion or the resulting noise by suppressing application of an adhesive material to a portion where the separation/re-adhesion occurs. As noise that may occur in an actual usage environment is suppressed, the battery pack 350 and/or the electronic device 200 including the same may relieve discomfort that may be provided to a user. In an embodiment of the disclosure, the adhesive tape(s) 235, 255, 353, and 355 may create a convenient self-repair environment by facilitating a worker or a user to separate the battery pack 350.

The effects obtainable from the disclosure are not limited to the effects mentioned above, and other effects not mentioned will be clearly understood by those skilled in the art from the description of the foregoing embodiment(s).

According to an embodiment of the disclosure, an electronic device (e.g., the electronic device 1001, or the external electronic devices 1002, 1004, 100, and 200 in FIGS. 1 to 5) may include a housing (e.g., the housing 201 in FIGS. 4 to 6) including a support plate (e.g., the first support member 211 in FIGS. 4 to 6), a display (e.g., the display 230 in FIG. 4 or FIG. 5) disposed on one surface of the support plate, and a battery pack (e.g., the battery 1089 or 250 in FIG. 1, FIG. 4, and/or FIG. 5, and/or the battery pack 350 in FIGS. 8 to 11) including a body (e.g., the body 251 or 351 in FIG. 6 and/or FIGS. 8 to 11) disposed on the other surface of the support plate, and a first adhesive tape (e.g., the first adhesive tape 353 in FIG. 6 and/or FIGS. 8 to 11) disposing or attaching the body on or to the other surface of the support plate, using a first area (e.g., the first area 353a in FIG. 7). In an embodiment of the disclosure, one surface of the first adhesive tape may include a non-adhesive area (e.g., the non-adhesive area NAA in FIG. 7) disposed to face an upper surface of the body in at least a portion of an edge of the first area, a first adhesive area (e.g., the first adhesive area AA1 in FIG. 7) disposed in contact with the non-adhesive area in the first area and attached to the upper surface of the body while providing a first adhesive force, and a second adhesive area (e.g., the second adhesive area AA2 in FIG. 7) disposed in contact with at least the first adhesive area out of the non-adhesive area and the first adhesive area, in the first area, and attached to the upper surface of the body while providing a second adhesive force smaller than the first adhesive force.

According to an embodiment of the disclosure, the non-adhesive area may be disposed at a first distance (e.g., the first distance D1 in FIG. 12) from an upper end of the housing, and the second adhesive area may be disposed at a second distance (e.g., the second distance D2 in FIG. 12) from a lower end of the housing. In an embodiment of the disclosure, the first distance may be greater than the second distance.

According to an embodiment of the disclosure, the non-adhesive area may be provided in at least one of corner portions formed by two sides of the first area in order of proximity to the upper end of the housing.

According to an embodiment of the disclosure, the electronic device may further include a camera module (e.g., the camera assembly 207 in FIG. 5 or the camera module 207 in FIG. 12) disposed on the one surface or the other surface of the support plate in an area between an upper end of the housing and the battery pack.

According to an embodiment of the disclosure, a plurality of non-adhesive areas may be provided in two adjacent corner portions of the first area, respectively, and a plurality of first adhesive areas may be disposed in contact with respective ones of the plurality of non-adhesive areas.

According to an embodiment of the disclosure, the plurality of first adhesive areas may be inclined with respect to each other.

According to an embodiment of the disclosure, the first adhesive tape may further include at least one third adhesive area (e.g., the third adhesive area AA3 in FIG. 7) disposed at least partially in contact with the second adhesive area in the first area, and attached to the upper surface while providing a third adhesive force greater than the second adhesive force. In an embodiment of the disclosure, the at least one third adhesive area may extend along an edge of the first area between the plurality of first adhesive areas.

According to an embodiment of the disclosure, the electronic device may further include a fixing tape (e.g., the second adhesive tape 255 in FIG. 6 or the fixing tape 355 in FIG. 10 or FIG. 11) disposed between the support plate and the first adhesive tape and attaching at least a portion of the first area to the support plate.

According to an embodiment of the disclosure, the first adhesive tape may further include a second area (e.g., the second area 353b in FIG. 7) extending from the first area and disposed to contact at least a portion of a side surface of the body and at least a portion of a lower surface of the body.

According to an embodiment of the disclosure, a portion of the second area may be disposed to contact the upper surface of the body.

According to an embodiment of the disclosure, the first adhesive tape may further include slits (e.g., the slits 353c in FIG. 7) or cut grooves arranged along a boundary between the first area and the second area.

According to an embodiment of the disclosure, a battery pack (e.g., the battery 1089 or 250 in FIG. 1, FIG. 4, and/or FIG. 5 and/or the battery pack 350 in FIGS. 8 to 11) may include a body (e.g., the body 251 or 351 in FIG. 6 and/or FIGS. 8 to 11) including an upper surface (e.g., the upper surface US in FIG. 4 or FIG. 6), a lower surface (e.g., the lower surface LS in FIG. 5) opposite to the upper surface, and a side surface (e.g., the side surface SS in FIGS. 4 to 6) connecting the lower surface to the upper surface, and a first adhesive tape (e.g., the first adhesive tape 353 in FIG. 6, FIG. 7, and/or FIG. 11) including a first area (e.g., the first area 353a in FIG. 7) disposed to face the upper surface. In an embodiment of the disclosure, one surface of the first adhesive tape may include a non-adhesive area (e.g., the non-adhesive area NAA in FIG. 7) disposed to face the upper surface in at least a portion of an edge of the first area, a first adhesive area (e.g., the first adhesive area AA1 in FIG. 7) disposed in contact with the non-adhesive area in the first area and attached to the upper surface while providing a first adhesive force, and a second adhesive area (e.g., the second adhesive area AA2 in FIG. 7) disposed in contact with at least the first adhesive area out of the non-adhesive area and the first adhesive area, in the first area, and attached to the upper surface while providing a second adhesive force smaller than the first adhesive force.

According to an embodiment of the disclosure, the non-adhesive area may be provided in at least one of corner portions formed by two sides of the first area.

According to an embodiment of the disclosure, a plurality of non-adhesive areas may be provided in two adjacent corner portions of the first area, respectively, and a plurality of first adhesive areas may be disposed in contact with respective ones of the plurality of non-adhesive areas.

According to an embodiment of the disclosure, the plurality of first adhesive areas may be inclined with respect to each other.

According to an embodiment of the disclosure, the first adhesive tape may further include at least one third adhesive area (e.g., the third adhesive area AA3 in FIG. 7) disposed at least partially in contact with the second adhesive area in the first area and attached to the upper surface while providing a third adhesive force greater than the second adhesive force. In an embodiment of the disclosure, the at least one third adhesive area may extend along an edge of the first area between the plurality of first adhesive areas.

According to an embodiment of the disclosure, the first adhesive tape may further include a second area (e.g., the second area 353b in FIG. 7) extending from the first area and disposed to contact at least a portion of the side surface and at least a portion of the lower surface.

According to an embodiment of the disclosure, a portion of the second area may be disposed to contact the upper surface.

According to an embodiment of the disclosure, the first adhesive tape may further include slits (e.g., the slits 353c in FIG. 7) or cut grooves arranged along a boundary between the first area and the second area.

According to an embodiment of the disclosure, the first adhesive tape may further include a fourth adhesive area (e.g., the fixing tape 355 in FIG. 10 or FIG. 11) provided on the other surface of the first adhesive tape and disposed in at least a portion of the first area.

While the disclosure has been described by way of example with respect to an embodiment, it should be understood that the embodiment is intended to be illustrative, not limiting the disclosure. It will be apparent to those skilled in the art that various changes in form and detailed construction may be made therein without departing from the overall scope of the disclosure, including the appended claims and their equivalents.

## Claims

1. An electronic device (1001; 1002; 1004; 100; 200) comprising:
a housing (201) including a support plate (211);
a display (230) disposed on one surface of the support plate; and
a battery pack (250; 350) including a body (251; 351) disposed on the other surface of the support plate, and a first adhesive tape (353) disposing or attaching the body on or to the other surface of the support plate, using a first area (353a),
wherein one surface of the first adhesive tape includes:
a non-adhesive area (NAA) disposed to face an upper surface of the body in at least a portion of an edge of the first area;
a first adhesive area (AA1) disposed in contact with the non-adhesive area in the first area and attached to the upper surface of the body while providing a first adhesive force; and
a second adhesive area (AA2) disposed in contact with at least the first adhesive area out of the non-adhesive area and the first adhesive area, in the first area, and attached to the upper surface of the body while providing a second adhesive force smaller than the first adhesive force.

2. The electronic device of claim 1, wherein the non-adhesive area is disposed at a first distance (D1) from an upper end of the housing,
wherein the second adhesive area is disposed at a second distance (D2) from a lower end of the housing, and
wherein the first distance is greater than the second distance.

3. The electronic device of claim 1, wherein the non-adhesive area is provided in at least one of corner portions formed by two sides of the first area in order of proximity to the upper end of the housing.

4. The electronic device of claim 1, further comprising a camera module (207) disposed on the one surface or the other surface of the support plate in an area between an upper end of the housing and the battery pack.

5. The electronic device of any one of claims 1 to 4, wherein a plurality of non-adhesive areas are provided in two adjacent corner portions of the first area, respectively, and
wherein a plurality of first adhesive areas are disposed in contact with respective ones of the plurality of non-adhesive areas.

6. The electronic device of claim 5, wherein the plurality of first adhesive areas are inclined with respect to each other.

7. The electronic device of any one of claims 5 to 6, wherein the first adhesive tape further includes at least one third adhesive area (AA3) disposed at least partially in contact with the second adhesive area in the first area, and attached to the upper surface while providing a third adhesive force greater than the second adhesive force, and
wherein the at least one third adhesive area extends along an edge of the first area between the plurality of first adhesive areas.

8. The electronic device of any one of claims 1 to 7, further comprising a fixing tape (255; 355) disposed between the support plate and the first adhesive tape and attaching at least a portion of the first area to the support plate.

9. The electronic device of any one of claims 1 to 8, wherein the first adhesive tape further includes a second area (353b) extending from the first area and disposed to contact at least a portion of a side surface of the body and at least a portion of a lower surface of the body.

10. The electronic device of claim 9, wherein a portion of the second area is disposed to contact the upper surface of the body.

11. The electronic device of any one of claims 9 to 10, wherein the first adhesive tape further includes slits (353c) or cut grooves arranged along a boundary between the first area and the second area.

12. A battery pack (250; 350) comprising:
a body (251; 351) including an upper surface (US), a lower surface (LS) opposite to the upper surface, and a side surface (SS) connecting the lower surface to the upper surface; and
a first adhesive tape (353) including a first area (353a) disposed to face the upper surface,
wherein one surface of the first adhesive tape includes:
a non-adhesive area (NAA) disposed to face the upper surface in at least a portion of an edge of the first area;
a first adhesive area (AA1) disposed in contact with the non-adhesive area in the first area and attached to the upper surface while providing a first adhesive force; and
a second adhesive area (AA2) disposed in contact with at least the first adhesive area out of the non-adhesive area and the first adhesive area, in the first area, and attached to the upper surface while providing a second adhesive force smaller than the first adhesive force.

13. The battery pack of claim 12, wherein a plurality of non-adhesive areas are provided in two adjacent corner portions of the first area, respectively, and
wherein a plurality of first adhesive areas are disposed in contact with respective ones of the plurality of non-adhesive areas.

14. The battery pack of claim 13, wherein the plurality of first adhesive areas are inclined with respect to each other.

15. The battery pack of any one of claims 12 to 14, wherein the first adhesive tape further includes a second area (353b) extending from the first area and disposed to contact at least a portion of the side surface and at least a portion of the lower surface.
